# EUROPÄISCHE PATENTANMELDUNG

(11) **EP 2 687 734 A1**
(43) Veröffentlichungstag der Anmeldung: **22.01.2014**
(21) Anmeldenummer: 13003632.0
(22) Anmeldetag: 18.07.2013
(51) Int. Cl.: F16B 21/02, F16B 21/09, F16B 37/04, F16L 41/14

(54) **Vorrichtung und Verfahren zur Befestigung eines Flansches an einer Bauteilwand**

(30) Priorität: 19.07.2012 DE 102012014283
(71) Anmelder: Metek Meteorologische Messtechnik GmbH, 25337 Elmshorn (DE)
(72) Erfinder: Lorenzen, Boy, 25492 Heist (DE)
(74) Vertreter: Heinemeyer, Karsten

(57) **Zusammenfassung**

Beschrieben wird ein Verfahren sowie eine Vorrichtung zur Befestigung eines Flansches (7) an einer Bauteilwand (6), der eine Aufnahme für ein Funktionselement, wie etwa einen Motor, eine Beleuchtungseinrichtung, eine Kamera oder einen Sensor, aufweist und eine Öffnung (4) der Bauteilwand (6) durchragt.Auf einer dem Funktionselement zugewandten Außenseite der Bauteilwand (6) ist eine Abdichtung (11) zwischen Flansch (7) und Bauteilwand (6) vorgesehen während auf einer dem Funktionselement abgewandten Innenseite der Bauteilwand (6) ein Befestigungselement (10) vorgesehen ist, mit dem der Flansch (7) an der Bauteilwand (6) fixiert ist. Die beschriebene technische Lösung zeichnet sich dadurch aus, dass die Öffnung (4) in der Bauteilwand (6) als Durchgangsloch mit einem ersten Durchmesser D₁ ausgeführt ist, die am Umfang in wenigstens einem Bereich eine Erweiterung (5) des Durchgangslochs mit einem zweiten Durchmesser D₁+ΔD aufweist, und dass der Flansch (7) in einer ersten Erstreckungsrichtung eine Länge aufweist, die größer als der zweite Durchmesser ist D₁+ΔD ist, und der in einer zweiten Erstreckungsrichtung, die in der gleichen Ebene wie die erste liegt, eine Breite aufweist, die kleiner als der zweite Durchmesser ist D₁+ΔD und größer als der erste Durchmesser D₁ ist. Nach dem Durchstecken durch die Bauteilwand (6) wird der Flansch (7) zunächst in eine annähernd planparallel zur Bauteilwand (6) verlaufende Ebene geschwenkt, dann in dieser Ebene gedreht und schließlich fixiert.

## Beschreibung

Die Erfindung betrifft eine Vorrichtung sowie ein Verfahren zur Befestigung eines Flansches an einer Bauteilwand, der eine Aufnahme für ein spezielles Funktionselement, wie etwa einen Motor, eine Beleuchtungseinrichtung, eine Kamera oder einen Sensor, aufweist. Der Flansch durchragt eine Öffnung der Bauteilwand, wobei auf einer dem Funktionselement zugewandten Außenseite der Bauteilwand eine Abdichtung zwischen Flansch und Bauteilwand vorgesehen ist und auf einer dem Funktionselement abgewandten Innenseite der Bauteilwand ein Befestigungselement vorgesehen ist, mit dem der Flansch an der Bauteilwand fixiert ist.

Bei der Montage von Flanschen bzw. Fittings zur Befestigung von Gegenständen, die spezielle technische Funktionen übernehmen, an unzugänglichen Stellen von Bauteilen oder Bauwerken, insbesondere im Inneren von Rohrleitungssystemen oder an Außenseiten von Gebäuden, stellt es vielfach ein Problem dar, derartige Funktionselemente sicher und genau an der gewünschten Stelle zu befestigen. Hierbei wird eine Montage oftmals auch dadurch erschwert, dass sie bei einem bereits fertig gestellten und zum Teil in Betrieb genommenen Bauwerk oder Bauteil erfolgt. In diesem Zusammenhang sei beispielhaft die Montage von Motoren, Beleuchtungseinrichtungen, Kameras oder Sensoren an der Außenseite von Gebäuden oder im Inneren von Prozessmedien führenden Kanälen, Schächten oder Rohrleitungen erwähnt.

Insbesondere die Montage von Sensoren sowie der hierfür benötigten Aufnahmen stellt in vielen Fällen ein Problem dar. Aus der modernen Anlagentechnik sind Sensoren, die Messdaten zur Steuerung bzw. Regelung unterschiedlichster Anlagenkomponenten liefern, nicht mehr wegzudenken. Aufgrund einer immer weiter fortschreitenden Prozessautomatisierung im Bereich der Industrie sind Sensoren zur Erfassung der Prozessparameter elementarer Bestandteil von Industrieanlagen. Problematisch in Bezug auf die Anordnung der Sensoren ist oftmals, dass diese an Stellen befestigt werden müssen, die zumindest nur schwer zugänglich sind. Oft sind solche Sensoren auch nachträglich im Zuge von Anlagenertüchtigungen anzubringen. Beispielhaft sollen an dieser Stelle Strömungssensoren genannt werden, die in Rohrleitungen, Strömungsschächten oder Strömungskanälen sowie an umströmten Bauteilen oder Bauwerken befestigt werden, um Daten in Bezug auf die Strömungsverhältnisse in durchströmten Anlagenkomponenten oder die Umströmung von Bauteilen oder Bauwerken zu liefern.

Insbesondere im Bereich der Kraftwerkstechnik sind Rohrleitungen, Kanäle sowie Schächte zur Führung von Prozessgasen, Stoffgemischen oder als Teil von Be- und Entlüftungsanlagen bekannt, die im Inneren z. B. Sensoren zur Bestimmung von Stoffkonzentrationen oder zur Erfassung der jeweiligen Strömungsverhältnisse, insbesondere der Strömungsgeschwindigkeit aufweisen.

Ebenso ist es in der Gebäudetechnik, vor allem aufgrund der immer höher werdenden Bauwerke, teilweise von erheblicher Bedeutung, Funktionselemente an Außenwänden vorzusehen. Derartige Funktionselemente dienen oftmals der Beleuchtung, der Verstellung von Komponenten der Gebäudetechnik, der optischen Aufnahme ausgewählter Bereiche oder der Erfassung von Zustandsparametern, wie Temperatur, Luftfeuchte und/oder herrschenden Windverhältnissen. Teilweise ist es auch hier von erheblicher Bedeutung, die in Außenbereichen herrschenden Strömungsverhältnisse zu erfassen, um so Aussagen über die auf ein Bauwerk einwirkenden Belastungen verbunden mit eventuellen Bewegungen des Bauwerks und somit über die erforderliche Ableitung entsprechender Kräfte machen zu können. Gerade innerhalb von Rohrleistungssystemen oder Schächten oder bei hohen Bauwerken ist es allerdings oftmals schwierig, die entsprechenden Sensoren an der Außenwand der Anlagen bzw. Bauwerke zu befestigen. Hierbei ist nicht nur die zuverlässige Befestigung eines Sensors an einer Bauteil- oder einer Bauwerkswand zu gewährleisten, sondern darüber hinaus auch sicherzustellen, dass während der Montage eines Sensors, insbesondere der hierfür benötigten Befestigungsflansche bzw. Fittings, keine Teile in eine Rohrleitung, einen Schacht oder einen Kanal hinein oder womöglich von einem Bauwerk hinunter fallen.

Einen speziellen Anwendungsfall stellt in diesem Zusammenhang die Befestigung von Funktionselementen, insesondere von Sensoren im Außenbereich von Windkraftanlagen dar. Sensoren werden vielfach mittels geeigneter Befestigungsfittings im Bereich der Gondel befestigt, um Informationen über die Windrichtung, die Windgeschwindigkeit, die Temperatur und/oder andere für den Betrieb der Windkraftanlage relevante Messgrößen zu erhalten. Eine fehlerhafte Montage eines Strömungssensors bzw. des zur Befestigung benötigten Fittings kann hier erhebliche Nachteile mit sich bringen. Zum einen stellt ein herabfallendes Bauteil während der Montage eine nicht unerhebliche Gefahr für am Boden befindliche Personen dar und ist selbst wenn keine Gefahr für Leib und Leben von dem herabfallenden Bauteil ausgeht, insbesondere bei Windkraftanlagen im Offshore-Bereich, in der Regel verloren. Zum anderen erfordert eine Montage an der Gondel von außen vergleichsweise komplizierte Verfahren und umfangreiche Maßnahmen zur Personensicherung. Schließlich können aufgrund der komplizierten Montage der Sensoren in der Höhe Fehler bei der Installation auftreten, die beispielsweise zu einer ungenauen Positionierung der Sensoren und somit zu Sensorausfällen oder Fehlmessungen führen können.

Ausgehend von dem beschriebenen Stand der Technik und den in diesem Zusammenhang auftretenden Problemen, liegt der Erfindung die Aufgabe zugrunde, eine Vorrichtung sowie ein Verfahren zur Befestigung eine Flansches bzw. Fittings, der der Aufnahme eines Funktionselements, etwa eines Motor, einer Beleuchtungseinrichtung, einer Kamera oder eines Sensors, im Bereich einer Bauteilwand dient, derart weiterzubilden, dass einerseits eine einfache Montage eines derartigen Flansches gewährleistet ist und andererseits eine zuverlässige Befestigung und Abdichtung des Flansches gegenüber der Bauteilwand erreicht wird. Die anzugebende technische Lösung soll vor allem den Verzicht auf aufwendige Hilfsmontagevorrichtungen ermöglichen und die Unfallgefahr während der Bauteilmontage minimieren. Ein Hineinfallen der zu montierenden Flansche in das Innere von Rohrleitungen, Kanälen und Schächten, bspw. zur Förderung von Luft oder Prozessgas, sowie das Herabfallen von hohen, luftumströmten Bauwerken, beispielsweise von Windkraftanlagen, soll mit Hilfe der erfindungsgemäß angegebenen Vorrichtung sowie des entsprechenden Verfahrens minimiert werden.

Die zuvor beschriebene Aufgabe wird mit einer Vorrichtung gemäß Anspruch 1 sowie einem Verfahren nach Anspruch 6 gelöst. Vorteilhafte Weiterbildungen der Erfindung sind Gegenstand der abhängigen Ansprüche und werden in der folgenden Beschreibung unter teilweiser Bezugnahme auf die Figuren näher erläutert.

Die Erfindung betrifft eine Vorrichtung zur Befestigung eines Flansches an einer Bauteilwand, der eine Aufnahme für ein Funktionselement aufweist und eine Öffnung der Bauteilwand durchragt. Der Begriff Bauteilwand schließt in diesem Zusammenhang auch Bauwerkswände, insbesondere schwer zugängliche Außenwände, ein. Hierbei ist auf einer dem Funktionselement zugewandten Außenseite der Bauteilwand eine Abdichtung zwischen dem Flansch und der Bauteilwand vorgesehen, während auf einer dem Funktionselement abgewandten Innenseite der Bauteilwand ein Befestigungselement angeordnet ist, mit dem der Flansch an der Bauteilwand fixiert ist. Die erfindungsgemäß ausgeführte Vorrichtung zeichnet sich dadurch aus, dass die Öffnung in der Bauteilwand als Durchgangsloch mit einem ersten Durchmesser D₁ ausgeführt ist, das an seinem Umfang in wenigstens einem Bereich eine Erweiterung des Durchgangslochs, die zu einer abschnittsweisen Erhöhung des Lochdurchmessers auf einen zweiten Durchmesser D₁ + ΔD führt, aufweist und dass der Flansch in einer Erstreckungsrichtung eine Länge aufweist, die größer als der zweite Durchmesser D₁ + ΔD ist, während dieser in einer zweiten, zumindest nahezu in der gleichen Ebene liegenden Erstreckungsrichtung eine Breite aufweist, die kleiner als der zweite Durchmesser D₁ + ΔD und größer als der erste Durchmesser D₁ ist. Unter einem Funktionselement im Sinne der Erfindung werden technische Einrichtungen, wie etwa Motoren, Beleuchtungseinrichtungen, Kameras oder Sensoren verstanden, die in nur schwer zugänglichen Bereichen von Bauteil- oder Bauwerkswänden, insbesondere im Inneren von Strömungskanälen oder an Außenfassaden von Gebäuden, befestigt werden,

Die wesentlichen Bauteile der erfindungsgemäßen Vorrichtung sind somit eine Öffnung in der Bauteilwand sowie ein Flansch, der nach erfolgter Montage der Befestigung eines Funktionselements, bevorzugt eines Sensors, wie etwa eines Strömungs-, Temperatur- oder Luftfeuchtesensors im angeströmten oder umströmten Außenbereich der Bauteilwand dient. Die Öffnung und der Flansch sind derart ausgeführt, dass der Flansch bei der Montage von der Innenseite her durch die Bauteilwand gesteckt und nach erfolgter Lageänderung im Außenbereich mit Hilfe eines auf der Innenseite der Bauteilwand angeordneten Befestigungselementes, beispielsweise einer Überwurfmutter, an der Bauteilwand fixiert wird. Bevorzugt wird der Flansch hierbei derart gegen die Außenseite der Bauteilwand gezogen, dass der Spalt zwischen Bauteilwand und Flansch zuverlässig abgedichtet wird.
Die Bauteilwand, insbesondere deren Außenseite, stellt hierbei einen Teil der Außenwand eines Bauteils, Gehäuses oder eines Bauwerks dar, der an einen von einem Medium angeströmten, durchströmten oder umströmten Bereich grenzt. Im Sinne der Erfindung wird hierbei unter der Innenseite der Bauteilwand diejenige Seite verstanden, die dem Außenbereich, in dem auch das Funktionselement angeordnet wird, abgewandt ist. Unter Außenseite der Bauteilwand wird hingegen die Seite der Bauteilwand im Außenbereich verstanden, an der das Funktionselement befestigt wird. In diesem Außenbereich ist es dann beispielsweise möglich, mit Hilfe eines geeigneten Sensors die dort herrschenden Strömungsverhältnisse, insbesondere die Strömungsrichtung und/oder die Strömungsgeschwindigkeit zu messen.

Erfindungsgemäß handelt es sich bei der Kontur der Öffnung, also der Umfangsform, nicht um eine stetige Kontur. Vielmehr sind wenigstens zwei Unstetigkeitsstellen vorgesehen, so dass die Öffnung eine geschlossene Umfangskontur mit wenigstens einer Erweiterung in Form einer Ausbuchtung aufweist. Vorzugsweise weist der Umfang der Öffnung über den größten Bereich ein Kreissegment mit einem vergleichsweise großen Krümmungsradius auf, während der Krümmungsradius der wenigstens einen Ausbuchtung, die in das große Kreissegment eingefügt ist, vergleichsweise klein ist. Der Durchmesser des großen Kreissegments, in das eine oder mehrere Ausbuchtungen eingefügt sein können, wird als erster Durchmesser D₁ bezeichnet. Im Bereich der Ausbuchtung ergibt sich hingegen ein maximaler Durchmesser von D₁+ΔD, der als zweiter Durchmesser bezeichnet wird. Dieser Durchmesser entspricht somit der Länge einer Strecke, die vom äußersten Punkt der Ausbuchtung bis zur gegenüberliegenden Seite der Öffnung reicht. Sofern das Durchgangsloch der Öffnung mehr als eine Erweiterung bzw. Ausbuchtung aufweist, können diese unterschiedliche Krümmungsradien aufweisen, so dass es in diesem Fall unterschiedlich große zweite Durchmesser D₁+ΔD geben kann.

Die erfindungsgemäß vorgesehene Ausführung der Öffnung hat den Vorteil, dass ein Flansch, der in einer ersten Erstreckungsrichtung eine Länge aufweist, die größer als der zweite Durchmesser D₁+ΔD ist, und der in einer zweiten Erstreckungsrichtung eine Breite aufweist, die kleiner, bevorzugt nur wenig kleiner als der zweite Durchmesser D₁+ΔD, aber größer als der erste Durchmesser D₁ ist, von der Innenseite durch die Bauteilwand auf deren Außenseite geschoben werden kann, hier hochgeklappt wird, so dass der Flansch zumindest annähernd in einer planparallelen Ebene zur Bauteilwand liegt, und er nun lediglich gedreht werden muss, so dass die gesamte Öffnung der Bauteilwand auf der Außenseite zuverlässig umschlossen wird. Auf vorteilhafte Weise ist zwischen dem Flansch und der Bauteilwandaußenseite eine Abdichtung vorgesehen, so dass kein Medium, das später das Funktionselement umströmt, durch die Bauteilwand bzw. die Öffnung in der Bauteilwand gelangen kann. Die Befestigung des Flansches erfolgt bevorzugt mit einer Überwurfmutter, die von der Innenseite der Bauteilwand her am Flansch befestigt wird und diesen an der Bauteilwand fixiert. Die Befestigung des Flansches erfolgt auf vorteilhafte Weise derart, dass dieser aufgrund seiner Befestigung gegen die Außenseite der Bauteilwand gezogen und so ein Spalt zwischen Flansch und Bauteilwand zuverlässig abgedichtet wird.

In einer bevorzugten Ausführungsform der Erfindung ist die Öffnung derart als Durchgangsloch ausgeführt, dass eine zentrale mittige Bohrung ein großes Kreissegment mit mehreren Segmenten bildet, die umfangsseitig durch vier Erweiterungen bzw. Ausbuchtungen verbunden sind. Die vorzugsweise vier Erweiterungen sind asymmetrisch angeordnet, vorzugsweise verfügen nur jeweils zwei über einen gleichen Krümmungsradius, so dass eine eindeutige Lageorientierung des Flansches möglich ist. Auf diese Weise kann bei der Montage des Flansches eine Verdrehsicherung realisiert und so sichergestellt werden, dass der Flansch und das Funktionselement in der richtigen Lage montiert werden. Die Mittelpunkte der vier Erweiterungen liegen in einem definierten Abstand zum Mittelpunkt der Hauptbohrung, wobei sich die Größe der zweiten Durchmesser D₁+ΔD bzw. der Krümmungsradien der einzelnen Ausbuchtungen sowie die Abstände der Mittelpunkte nach der Form des zum Einsatz kommenden Flansches richten.
In einer bevorzugten Ausführungsform der Erfindung hat der erste Durchmesser eine Größe von 50 bis 100 mm, insbesondere von 65 bis 75 mm, ganz besonders bevorzugt von etwa 70 mm. Die größere Ausbuchtung ist bevorzugt Teil eines Kreises, der einen Durchmesser von 20 bis 30 mm, insbesondere von etwa 25 mm aufweist. Die kleinere der beiden Ausbuchtungen hat gemäß einer speziellen Weiterbildung einen Durchmesser von 16 bis 24 mm, insbesondere von etwa 20 mm. Durch die Wahl eines Durchmesserverhältnisses von etwa 70 mm für das große Durchgangsloch und etwa 25 mm für die größere der beiden Ausbuchtungen und etwa 20 mm für die kleinere Ausbuchtung wird eine bevorzugte Verdrehsicherung bzw. besonders hochwertige Positionierung des Flansches gewährleistet. Der Ausdruck "etwa" berücksichtigt beispielsweise die in diesem Bereich üblichen Toleranzen beim Bohren von Durchgangslöchern in metallische oder kunststoffhaltige Werkstoffe.

Die Erfindung betrifft auch ein Verfahren zur Montage eines Flansches an einer Bauteilwand, der der Befestigung eines Funktionselements, etwa eines Motors, einer Beleuchtungseinrichtung, einer Kamera oder eines Sensors an der Bauteilwand dient. Hierbei wird zunächst eine Öffnung in der Bauteilwand hergestellt, anschließend der Flansch von einer dem Funktionselement abgewandten Innenseite durch die Bauteilwand hindurch gesteckt und schließlich derart an der Bauteilwand befestigt, dass an der dem Funktionselement zugewandten Außenseite der Bauteilwand eine Abdichtung zwischen Flansch und Bauteilwand hergestellt wird und dass der Flansch durch ein auf der dem Funktionselement abgewandten Innenseite der Bauteilwand vorgesehenes Befestigungselement an der Bauteilwand fixiert wird. Das erfindungsgemäße Verfahren zeichnet sich dadurch aus,
- dass zur Herstellung der Öffnung ein Durchgangsloch mit einem ersten Durchmesser D₁ in die Bauteilwand eingebracht wird,
- dass in wenigstens einem Bereich der Öffnung eine Erweiterung des Durchgangslochs hergestellt wird, so dass das Durchgangsloch in diesem erweiterten Bereich einen zweiten Durchmesser D₁+ΔD aufweist,
- dass ein Flansch durch die Öffnung gesteckt wird, der in einer ersten Erstreckungsrichtung eine Länge aufweist, die größer als der zweite Durchmesser D₁+ΔD ist, und der in einer zweiten Erstreckungsrichtung, die in nahezu gleicher Ebene wie die erste liegt, eine Breite aufweist, die kleiner als der zweite D₁+ΔD und größer als der erste Durchmesser D₁ist und
- dass dieser Flansch nach dem Durchstecken durch die Bauteilwand in eine zumindest annähernd planparallel zur Bauteilwand verlaufende Ebene geschwenkt und in dieser Ebene gedreht wird.

Das Verschwenken des Flansches erfolgt derart, dass insbesondere die Ebene, in der die erste sowie die zweite Erstreckungsrichtung des Flansches liegen, planparallel zur Bauteilwand verläuft. Selbstverständlich ist es denkbar, dass die Bauteilwand, insbesondere deren Außenseite gekrümmt ist und sich der Flansch, insbesondere nach der Fixierung durch das Befestigungselement, dieser Form anpasst. Ein besonderer Vorteil des erfindungsgemäßen Verfahrens ist auch darin zu sehen, dass dieses sowohl in einer Werkstatt als auch vor Ort, insbesondere zur Nachrüstung eines Funktionselements an der Außenseite einer Bauteil- oder Bauwerkswand, geeignet ist.

In einer bevorzugten Ausführungsform des erfindungsgemäßen Verfahrens wird der Flansch nach dem Durchstecken durch die Bauteilwand um einen Winkel von 90° gegenüber der Bauteilwand geklappt bzw. geschwenkt. Auf bevorzugte Weise wird zur Herstellung der Öffnung eine große Bohrung in die Bauteilwand eingebracht und weiterhin wenigstens zwei kleinere, insbesondere vier kleinere Bohrungen in die Bauteilwand eingebracht, deren Mittelpunkt einen definierten Abstand zum Mittelpunkt der ersten Bohrung haben. Auf vorteilhafte Weise werden vier kleinere Bohrungen eingebracht, von denen jeweils zwei einen gleichen Durchmesser bzw. Krümmungsradius aufweisen.

Gemäß einer speziellen Weiterbildung zeichnet sich das Verfahren dadurch aus, dass der Flansch an einem Werkzeug fixiert durch die Bauteilwand durchgesteckt, geschwenkt und gedreht wird. Das Werkzeug ist derart ausgeführt, dass es einerseits sicher am Flansch fixiert ist, sich darüber hinaus aber auch einfach, bspw. mit Hilfe eines Feder, Magnet- oder Schraubmechanismusses, wieder zerstörungsfrei vom Flansch lösen lässt. Darüber hinaus ist es derart ausgeführt, dass der bereits durch die Bauteilwand hindurch gesteckte Flansch ohne großen Kraftaufwand relativ zur Bauteilwand geschwenkt werden kann.

Die erfindungsgemäße Vorrichtung sowie das entsprechende Verfahren lassen sich bevorzugt überall dort einsetzen, wo ein Flansch bzw. Fitting von einer Innenseite einer Bauteil-, Gehäuse oder Bauwerkswand her auf der Außenseite der Wand montierte werden muss, da die Außenseite nicht oder nur mit verhältnismäßig großem Aufwand erreichbar ist. Anwendungsgebiete können die Kraftwerkstechnik, der Lüftungsanlagenbau, der Bau von Chemieanlagen, Stahlwerken o.ä. aber auch der Bau von Hochhäusern oder die Errichtung von Windkraftanlagen sein. Der grundsätzliche erfinderische Gedanke, auf der Kombination einer geeigneten Öffnung in der Bauteilwand mit einem speziell geformten Flansch, der nach dem Durchstecken durch die Bauteilwand geklappt und gedreht wird, beruht, ist somit nicht grundsätzlich durch seine Anwendung beschränkt.

Im Folgenden wird die Erfindung ohne Beschränkung des allgemeinen Erfindungsgedankens anhand von Ausführungsbeispielen unter Bezugnahme auf die Figuren näher erläutert. Dabei zeigen:
- Figur 1:: Schematische Darstellung des Lochbildes zur Herstellung einer erfindungsgemäßen Öffnung;
- Figur 2:: am Werkzeug fixierter Flansch vor dem Hindurchstecken durch die Bauteilwand;
- Figur 3:: am Werkzeug fixierter Flansch unmittelbar nach dem Hindurchstecken durch die Bauteilwand;
- Figur 4:: am Werkzeug fixierter Flansch nach dem Verschwenken;
- Figur 5:: am Werkzeug fixierter Flansch nach einer 90°-Drehung;
- Figur 6:: am Werkzeug fixierter Flansch nach Befestigung an der Bauteilwand mit Hilfe einer Überwurfmutter.

Im Folgenden wird die Montage eines Flansches beispielhaft anhand eines Flansches beschrieben, der zur Aufnahme eines Sensors zur Erfassung von Winddaten, wie etwa Windgeschwindigkeit und/oder Windrichtung, an der Außenseite eines Spinners einer Windkraftanlage vorgesehen ist. Wie bereits erläutert wurde, ist die Erfindung allerdings weder auf das Anwendungsgebiet der Windkraftanlagentechnik noch auf die Erfassung von Winddaten beschränkt. Vielmehr kann eine entsprechende Montage auch an anderen Bauwerken bzw. Bauteilen erfolgen und/oder abweichende Parameter, wie etwa Temperatur, Luftfeuchte, Partikelgehalt, Prozessgaszusammensetzung, Strahlung o.ä. erfasst werden.

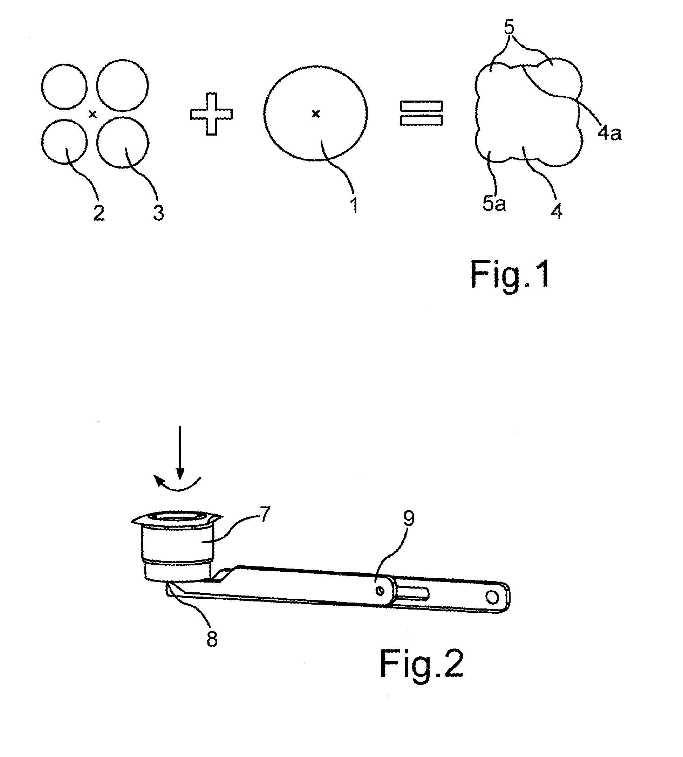

In der bevorzugten Ausführungsform der Erfindung gemäß Figur 1 beginnt die Montage eines Flansches, der der Aufnahme eines als Sensor ausgeführten Funktionselements dient, zunächst mit dem Bohren von vier Durchgangslöchern 2, 3, von denen jeweils zwei einen gleichen Durchmesser aufweisen. Das Lochbild ist schematisch in Figur 1 dargestellt. Das große Durchgangsloch 1 wird mit einem Durchmesser von 70 mm, die Durchgangslöcher 3 für die beiden größeren Ausbuchtungen mit einem Durchmesser von 25 mm und die Durchgangslöcher 2 für die beiden kleineren Ausbuchtungen mit einem Durchmesser von 20 mm gebohrt. Die vier Löcher 2, 3 werden in definiertem Abstand zueinander gebohrt.

Im Zentrum der vier Durchgangslöcher 2, 3 wird schließlich eine größere Bohrung 1 erstellt. Im Ergebnis ergibt sich somit eine Öffnung 4 in der Bauteilwand in Form eines Durchgangslochs mit einer Umfangskontur, die aus vier Kreissegmenten 4a mit einem ersten Durchmesser D₁ und vier zwischen den Kreissegmenten angeordneten Erweiterungen bzw. Ausbuchtungen 5 mit einem zweiten Durchmesser gebildet wird. Da jeweils zwei der Ausbuchtungen 5a über einen gleichen Krümmungsradius verfügen und Ausbuchtungen mit unterschiedlichem Krümmungsradius gegenüberliegend angeordnet sind, gilt in diesem Fall, dass die zweiten Durchmesser der Öffnung, nämlich die Strecke zwischen den äußersten Punkten der Ausbuchtungen 5 gleich sind und eine Länge von D₁ + ΔD aufweisen.

Eine Öffnung 4 in der Bauteilwand, wie sie in Figur 1 gezeigt ist, bietet vor allem den Vorteil, dass durch diese Öffnung 4 ein Flansch bzw. Fitting quer durchgesteckt werden kann, dessen äußere Abmaße im montierten Zustand größer als der Umfang der Öffnung ist. Nach dem Durchstecken wird der Fitting mit Hilfe eines geeigneten Werkzeugs um 90° geschwenkt und anschließend von außen abdichtend zurückgezogen. Von innen wird der Flansch schließlich mit Hilfe einer Überwurfmutter festgeschraubt. Mit Hilfe der Kombination einer geeigneten Öffnung mit einem Flansch ist es somit möglich, Flansche bzw. Fittings für Funktionselemente, wie etwaSensoren, an der äußeren Seite einer Bauteilwand zu befestigen, indem man den Flansch durch die Bauteilwand hindurchsteckt. Aufgrund der beschriebenen Form ist gleichzeitig eine zuverlässige und sichere Abdichtung gegenüber der Bauteilwand gewährleistet.

Figur 2 zeigt eine Bauteilwand 6 mit einer Öffnung 4, wie sie im Zusammenhang mit Figur 1 erläutert worden ist. Weiterhin ist ein Flansch 7 dargestellt, der auf seiner Rückseite 8 an einem Werkzeug 9 fixiert ist. Das Werkzeug 9 ist derart ausgeführt, dass der Flansch 7 sicher aber auch zerstörungsfrei lösbar gehalten wird und gleichzeitig sowohl geschwenkt, also in eine andere Haupterstreckungsebene bewegt, als auch in dieser Ebene gedreht werden kann.

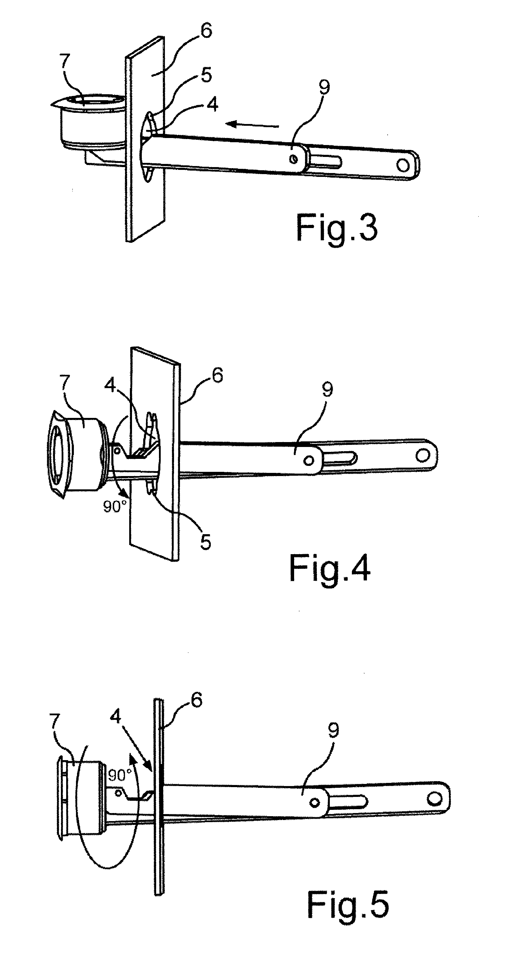

Im Weiteren zeigt Figur 3 den am Werkzeug 9 fixierten Flansch 7, der bereits durch die Öffnung 4 hindurchgesteckt wurde und sich somit an der Außenseite 6a der Bauteilwand 6, bzw. im Außenbereich der Windkraftanlage, in der später Strömungssensor am Flansch 7 befestigt werden soll, befindet. Entsprechend der Außenkontur des Flansches 7 wurde dieser durch die Öffnung 4 bzw. die Ausbuchtungen 5 der Öffnung 4 hindurch geführt. Der Flansch 7 befindet sich hierbei immer noch in der Lage, in der er durch die Bauteilwand 6 hindurchgeführt worden ist.

Figur 4 zeigt den Flansch 7 in einer aufgeklappten Form. Das Werkzeug 9 ist hierbei derart ausgeführt, dass es den am Werkzeug 9 fixierten Flansch um 90° schwenken kann. Der Flansch 7, an dem später ein Strömungssensor befestigt werden soll, befindet sich nunmehr in einer Position annähernd parallel zur Bauteilwand 6, und somit in seiner späteren Einbaulage.

Figur 5 zeigt, wie der Flansch 7 in aufgeklappter Position um 90° gedreht wird. Durch diese Drehung um 90° wird zuverlässig sichergestellt, dass der erfindungsgemäß ausgeführte Flansch 7 die korrespondierende Öffnung 4, durch die er zuvor durchgesteckt wurde, zuverlässig umschließt. Bei dem gesamten Umfang des Flansches 7 überragt dieser somit den Außenumfang der Öffnung 4 in der Bauteilwand 6.

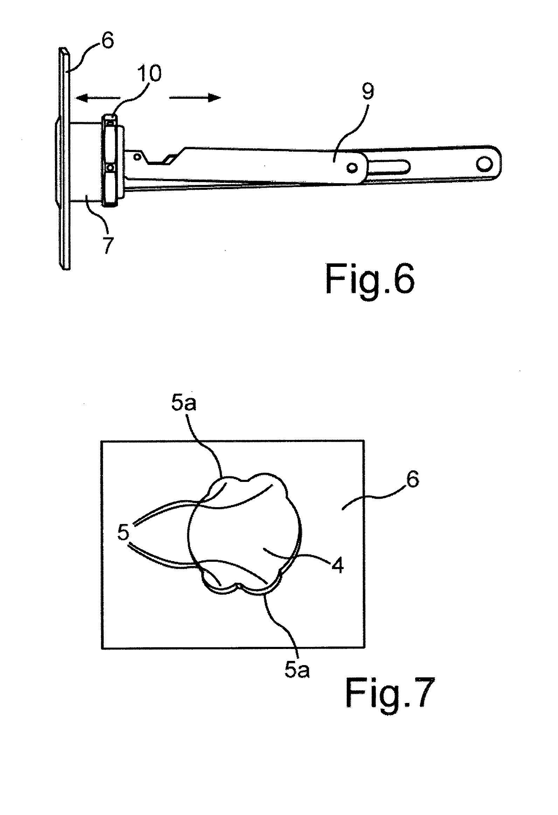

Figur 6 zeigt schließlich die Bauteilwand 6 mit dem darin befestigten Flansch 7. Mit Hilfe des Werkzeugs 9, mit dem der Flansch 7 fixiert ist, wird der Flansch 7 zurückgezogen und eine als Befestigungselement 10 vorgesehene Überwurfmutter über den Flansch geschraubt. Durch das Festschrauben der Überwurfmutter 10 wird der Flansch 7 einerseits zuverlässig an der Bauteilwand 6 fixiert und andererseits sicher gegen die Außenseite der Bauteilwand 6 gezogen, so dass ein Ringspalt zwischen Flansch 7 und Bauteilwand 6 abgedichtet wird. Der Flansch 7 befindet sich nunmehr in einer fertig fixierten Position an der Bauteilwand 6 und ist gleichermaßen abgedichtet gegenüber dem Strömungsbereich. In einem letzten Schritt muss nun lediglich noch das Werkzeug 9, das beispielsweise über einen entsprechend geeigneten ausgeführten Federmechanismus verfügt, vom Flansch gelöst werden.

Figur 7 zeigt nochmals die Öffnung 4, die in eine Bauteilwand 6 eingebracht ist. Zur Herstellung der Öffnung 4 wurden, wie bereits im Zusammenhang mit Figur 1 erläutert, insgesamt fünf Bohrungen in die Bauteilwand eingebracht. Zunächst jeweils zwei Bohrungen 2, 3 mit einem Durchmesser von 20 bzw. 25 mm und anschließend eine große, zentrale Bohrung 1 mit einem Durchmesser von 70 mm. Auf diese Weise wird eine Öffnung 4 hergestellt, die umfangsseitig insgesamt vier Erweiterungen bzw. Ausbuchtungen 5 aufweist, von denen zwei Bohrungen 5a einen kleineren Krümmungsradius als die anderen beiden aufweisen.

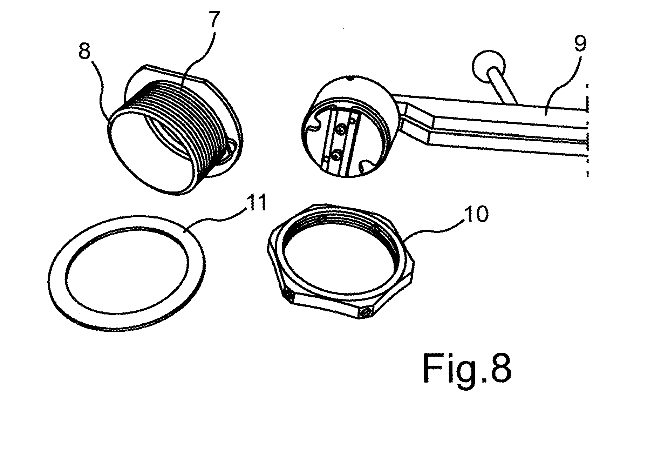

In Figur 8 sind in demontiertem Zustand die Komponenten Flansch 7, der an seinem hinteren Ende 8 über ein Außengewinde verfügt, Überwurfmutter 10 und Dichtelement 11 dargestellt. Zur Montage wird das Werkzeug 9 am Ende 8 des Flansches 7 in dessen Innerem fixiert und nach erfolgter Montage wieder gelöst. In montiertem Zustand befindet sich auf der Außenseite der Bauteilwand zwischen dem Flansch 7 und der Bauteilwand 6 das Dichtelement 11. Die Befestigung des Flansches 7 erfolgt mit Hilfe der als Befestigungselement vorgesehenen Überwurfmutter 10 von der Innenseite der Bauteilwand her.

Bei dem Bauteil, an dem ein Flansch auf die erläuterte Weise befestigt wird, handelt es sich um einen Spinner einer Windkraftanlage. Der Spinner befindet sich in Strömungsrichtung des Windes noch vor den Flügeln der Windkraftanlage und stellt somit das Bauteil dar, auf das der Wind als erstes auftritt. Die genaue Messung der Windstärke und Windrichtung in diesem Bereich ist von entscheidender Bedeutung für eine exakte Ausrichtung und somit einen wirtschaftlichen Betrieb der Windkraftanlage. Die Befestigung der Fittings an bestehenden Windkraftanlagen zur Aufnahme der Sensoren insbesondere von Ultraschallsensoren, in diesem Bereich ist bislang aufwendig und fehleranfällig. Die erfindungsgemäße Vorrichtung sowie das entsprechende Verfahren stellt in diesem Zusammenhang eine Möglichkeit bereit, von der Innenseite des Spinners her, die Fittings für die Sensoren zu montieren. Eine Montage von außen ist gänzlich überflüssig.

### Bezugszeichenliste

- 1: großes Durchgangsloch
- 2: größeres Loch für Ausbuchtung
- 3: kleineres Loch für Ausbuchtung
- 4: Öffnung
- 4a: Kreissegment
- 5: Ausbuchtungen
- 5a: kleinere Ausbuchtung
- 6: Bauteilwand
- 7: Flansch
- 8: Flanschrückseite
- 9: Werkzeug
- 10: Befestigungselement
- 11: Dichtelement

## Patentansprüche

1. Vorrichtung zur Befestigung eines Flansches (7) an einer Bauteilwand (6), der eine Aufnahme für ein Funktionselement aufweist und eine Öffnung (4) der Bauteilwand (6) durchragt, wobei auf einer dem Funktionselement zugewandten Außenseite der Bauteilwand (6) eine Abdichtung zwischen Flansch (7) und Bauteilwand (6) vorgesehen ist und auf einer dem Funktionselement abgewandten Innenseite der Bauteilwand (6) ein Befestigungselement (10) vorgesehen ist, mit dem der Flansch (7) an der Bauteilwand (6) fixiert ist,
**dadurch gekennzeichnet, dass** die Öffnung (4) in der Bauteilwand (6) als Durchgangsloch mit einem ersten Durchmesser D₁ ausgeführt ist, die am Umfang in wenigstens einem Bereich eine Erweiterung (5) des Durchgangslochs mit einem zweiten Durchmesser D₁+ΔD aufweist, und dass der Flansch (7) in einer ersten Erstreckungsrichtung eine Länge aufweist, die größer als der zweite Durchmesser ist D₁+ΔD ist, und der in einer zweiten Erstreckungsrichtung, die zumindest nahezu in der gleichen Ebene wie die erste liegt, eine Breite aufweist, die kleiner als der zweite Durchmesser ist D₁+ΔD und größer als der erste Durchmesser D₁ ist.

2. Vorrichtung nach Anspruch 1,
**dadurch gekennzeichnet, dass** die Öffnung (4) umfangsseitig aus vier Kreissegmenten (4a) eines Kreises, der den ersten Durchmesser D₁ aufweist, die durch vier kreissegmentförmige Ausbuchtungen (5) verbunden sind, gebildet wird.

3. Vorrichtung nach Anspruch 2,
**dadurch gekennzeichnet, dass** zwei oder mehrere dieser Ausbuchtungen (5) einen unterschiedlichen Krümmungsradius aufweisen und eine eindeutige Lagebestimmung des Flansches (7) ermöglichen.

4. Vorrichtung nach einem der Ansprüche 1 bis 3,
**dadurch gekennzeichnet, dass** das Funktionselement als Sensor ausgeführt und zur Messung einer Strömung, einer Temperatur und/oder einer Luftfeuchte vorgesehen ist.

5. Vorrichtung nach einem der Ansprüche 1 bis 4,
**dadurch gekennzeichnet, dass** das Funktionselement als Ultraschallsensor ausgeführt ist.

6. Verfahren zur Montage eines Flansches (7) an einer Bauteilwand (6), der der Befestigung eines Funktionselements an der Bauteilwand (6) dient, bei dem eine Öffnung (4) in der Bauteilwand (6) hergestellt, der Flansch (7) von einer dem Funktionselement abgewandten Seite zunächst durch die Bauteilwand (6) hindurch gesteckt und schließlich derart an der Bauteilwand (6) befestigt wird, dass an der dem Funktionselement zugewandten Seite der Bauteilwand (6) eine Abdichtung zwischen Flansch (7) und Bauteilwand (6) hergestellt wird und dass der Flansch (7) durch ein auf der dem Funktionselement abgewandten Seite der Bauteilwand (6) vorgesehenes Befestigungselement (10) an der Bauteilwand (6) fixiert wird,
**dadurch gekennzeichnet, dass** zur Herstellung der Öffnung (4) ein Durchgangsloch (1) mit einem ersten Durchmesser D₁ in die Bauteilwand (6) eingebracht wird, in wenigstens einem Bereich der Öffnung (4) eine Erweiterung (5) des Durchgangslochs hergestellt wird, so dass die Öffnung (4) in diesem erweiterten Bereich (5) einen zweiten Durchmesser D₁+ΔD aufweist, dass ein Flansch (7) durch die Öffnung (4) gesteckt wird, der in einer ersten Erstreckungsrichtung eine Länge aufweist, die größer als der zweite Durchmesser D₁+ΔD ist, und der in einer zweiten Erstreckungsrichtung, die zumindest nahezu in der gleichen Ebene wie die erste liegt, eine Breite aufweist, die kleiner als der zweite D₁+ΔD und größer als der erste Durchmesser D₁ ist, und dass dieser Flansch (7) nach dem Durchstecken durch die Bauteilwand (6) in eine zumindest annähernd planparallel zur Bauteilwand (6) verlaufende Ebene geschwenkt und in dieser Ebene gedreht wird.

7. Verfahren nach Anspruch 6,
**dadurch gekennzeichnet, dass** der Flansch (7) derart geschwenkt wird, dass die Ebene, in der die erste und die zweite Erstreckungsrichtung liegt, zumindest annähernd planparallel zur Bauteilwand (6) verläuft.

8. Verfahren nach Anspruch 6 oder 7,
**dadurch gekennzeichnet, dass** der Flansch (7) um einen Winkel geschwenkt wird und damit eine Abdichtung der Öffnung (4) erfolgt

9. Verfahren nach einem der Ansprüche 1 bis 8,
**dadurch gekennzeichnet, dass** zur Herstellung der Öffnung (4) eine erste große Bohrung (1) in die Bauteilwand (6) eingebracht wird und weiterhin wenigstens zwei kleinere (2, 3), insbesondere vier kleinere Bohrungen in die Bauteilwand (6) eingebracht werden, deren Mittelpunkte einen definierten Abstand zum Mittelpunkt der ersten Bohrung (1) haben.

10. Verfahren nach Anspruch 9,
**dadurch gekennzeichnet, dass** vier kleinere Bohrungen (2, 3) in die Bauteilwand (6) eingebracht werden, von denen jeweils zwei einen gleichen Durchmesser aufweisen.

11. Verfahren nach einem der Ansprüche 1 bis 4,
**dadurch gekennzeichnet, dass** der Flansch (7) an einem Werkzeug (9) fixiert durch die Bauteilwand (6) hindurch gesteckt, geschwenkt und gedreht wird.

12. Spinner einer Windkraftanlage mit einer Vorrichtung nach einem der Ansprüche 1 bis 5.
